# EUROPÄISCHE PATENTSCHRIFT

(11) **EP 1 034 230 B1**
(45) Veröffentlichungstag und Bekanntmachung des Hinweises auf die Patenterteilung: **12.10.2005**
(21) Anmeldenummer: 98965680.6
(22) Anmeldetag: 19.11.1998
(51) Int. Cl.: C09J 4/00, C08F 222/32

(54) **CYANACRYLAT-KLEBSTOFF MIT ESTER- UND POLYMERZUSÄTZEN**
CYANACRYLATE ADHESIVE WITH ESTER AND POLYMER ADDITIVES
COLLE AU CYANOACRYLATE AVEC DES ADDITIFS ESTERS ET POLYMERES

(30) Priorität: 28.11.1997 DE 19752893
(43) Veröffentlichungstag der Anmeldung: 13.09.2000
(73) Patentinhaber: Henkel Kommanditgesellschaft auf Aktien, 40589 Düsseldorf (DE)
(72) Erfinder: KLAUCK, Wolfgang, D-40670 Meerbusch (DE); KLEIN, Johann, D-40593 Düsseldorf (DE); DUHM, Lydia, D-40593 Düsseldorf (DE); MAIER, Wolfgang, D-40233 Düsseldorf (DE)
(86) Internationale Anmeldenummer: PCT/EP1998/007441
(87) Internationale Veröffentlichungsnummer: WO 1999/028399

(56) Entgegenhaltungen:
- DE-A- 19 621 850
- US-A- 4 477 607
- CHEMICAL ABSTRACTS, vol. 89, no. 1, 1978 Columbus, Ohio, US; abstract no. 444700, V. KORSHAK, A.M. POLYAKOVA, K.A. MAGER UND V.N. SEMYANTSEV: "Cyakrin SO-4 adhesive" XP002100345 & SU 607 573 A (INSTITUTE OF HETEROORGANIC COMPOUNDS, ACADEMY OF SCIENCES, USSR)
- PATENT ABSTRACTS OF JAPAN vol. 2, no. 81, 28. Juni 1978 & JP 53 035744 A (TOAGOGEI CHEM. IND. CO. LTD.), 3. April 1978

## Beschreibung

Die Erfindung betrifft einen Cyanacrylat-Klebstoff mit einem Ester als Weichmacher.

Cyanacrylat-Klebstoffe mit einem Ester als Weichmacher sind bekannt. So wird in der DE 34 00 577 gelehrt, neben 4 bis 30 Gew.-% eines Copolymeren aus Vinylchlorid und Vinylacetat noch bis zu 25 Gew.-% eines Weichmachers zuzusetzen. Dieser Weichmacher ist ein Ester aus einer aromatischen Mono- oder Dicarbonsäure und einer Mono- bzw. Polyhydroxy-Verbindung. Angeblich wird durch die Zugabe dieses aromatischen Weichmachers die Härtungsgeschwindigkeit des Klebstoffes nicht wesentlich beeinträchtigt und auch die Qualität der Bindung bei der Aushärtung nicht wesentlich verschlechtert. Beim Nacharbeiten dieser Versuche wurde jedoch festgestellt, daß die Härtungsgeschwindigkeit deutlich herabgesetzt wurde. So wird die Abbindegeschwindigkeit von Cyanacrylsäureethylester z. B. an EPDM durch einen 30 %igen Zusatz von Butylbenzylphthalat von 5 sec auf 35 sec verlangsamt.

Auch in der DE 43 17 886 wird gelehrt, dem Cyanacrylat-Klebstoff zur Verminderung der Haftung auf der Haut folgende Ester zuzusetzen:
1. Aliphatische Carbonsäureester mit einer aliphatischen Gruppe, in der 6 oder mehr Kohlenstoffatome direkt miteinander verbunden sind.
2. Aliphatische Carbonsäureester mit mindestens 2 aliphatischen Gruppen, in denen 4 oder mehr Kohlenstoffatome direkt miteinander verbunden sind.
3. Carbonsäureester einer carbocyclischen Verbindung, die in einem Carbonsäurerest oder einem Alkoholrest eine aliphatische Gruppe aufweist, in der 5 oder mehr Kohlenstoffatome direkt miteinander verbunden sind. Außerdem enthalten die Cyanacrylat-Klebstoffe noch Polymerisationsbeschleuniger.

In der DE 196 21 850 wird ein Cyanacrylat-Klebstoff mit einem Ester-Zusatz beschrieben, der dadurch gekennzeichnet ist, daß als Ester mindestens ein Teil- und/oder Voll-Ester aus ein- oder mehrwertigen aliphatischen Carbonsäuren mit 1 bis 5 direkt miteinander verbundenen C-Atomen und 1- bis 5wertigen aliphatischen Alkoholen mit 1 bis 5 direkt miteinander verbundenen C-Atomen verwendet wird, wobei die Anzahl der direkt miteinander verbundenen C-Atome in den weiteren aliphatischen Gruppen maximal 3 beträgt, wenn eine aliphatische Gruppe 4 oder 5 C-Atome enthält. Als Beschleuniger wird Polyethylenglykol beschrieben.

In der SU 607573 wird ein Cyanacrylat-Klebstoff für das medizinische Gebiet beschrieben, der 20 bis 30 Gew.-% an Glycerin-Triacetat und 5 bis 10 Gew.-% an Polyethylencyanacrylat neben dem monomeren Ethyl-alpha-Cyanacrylat enthalten soll. Es wird nicht beschrieben, daß das Glycerintriacetat frei von Katalysatoren sein soll. Es ist offensichtlich auch nicht frei, denn der Cyanacrylat-Klebstoff wird bei Temperaturen von 5 °C und darunter aufbewahrt.

In der US 4,477,607 werden thixotrope Cyanacrylat-Zusammensetzungen beschrieben, die neben fein verteilter Kieselsäure auch Polymere enthalten können, zum Beispiel Polyvinylacetate, Polyacrylate, Polymethacrylate und Polycyanacrylate. Von Esteren und deren Alkalifreiheit ist keine Rede.

Die erfindungsgemäße Aufgabe besteht darin, die Nachteile der bekannten Cyanacrylat-Klebstoffe mit Weichmachern zu vermeiden, insbesondere einen Cyanacrylat-Klebstoff mit guter Lagerstabilität, brauchbaren Festigkeiten und praktisch unveränderter Abbindegeschwindigkeit bereitzustellen.

Die erfindungsgemäße Lösung ist den Patentansprüchen zu entnehmen. Sie besteht im wesentlichen darin, neben mindestens einem Teil- und/oder Voll-Ester aus einer ein- oder mehrwertigen aliphatischen Carbonsäure mit 1 bis 5 direkt miteinander verbundenen C-Atomen und 1- bis 5wertigen aliphatischen Alkoholen mit 1 bis 5 direkt miteinander verbundenen C-Atomen, wobei die Anzahl der direkt miteinander verbundenen C-Atome in den weiteren aliphatischen Gruppen maximal 3 beträgt, wenn eine aliphatische Gruppe 4 oder 5 direkt miteinander verbundene C-Atome enthält, noch 1 bis 60 Gew.-%, bezogen auf den Klebstoff insgesamt, eines Polymeren auf Basis von Vinylestern, Vinylethern, Estern der Acrylsäure und Methacrylsäure, Styrol bzw. daraus abgeleiteten Co- und Terpolymeren mit Ethylen und Butadien einzusetzen, wobei der Ester-Zusatz frei von Katalysatoren ist.

Bei der Alkoholkomponente des Esters handelt es sich vorzugsweise um Alkohole mit 1 bis 5, insbesondere mit 2 bis 4 OH-Gruppen und mit bis 2 bis 5, insbesondere 3 oder 4 direkt miteinander verbundenen C-Atomen. Die Anzahl der nicht direkt miteinander verbundenen C-Atome kann bis zu 110, insbesondere bis zu 18 C-Atomen betragen.

Als Beispiele für einwertige Alkohole seien genannt: Methanol, Ethanol, 1-Propanol, 2-Propanol, 1-Butanol, 2-Butanol, 2,2-Dimethyl-1-propanol, 2-Methyl-1-propanol, 2,2-Dimethyl-1-propanol, 2-Methyl-2-propanol, 2-Methyl-1-butanol, 3-Methyl-1-butanol, 2-Methyl-2-butanol, 3-Methyl-2-butanol, 1-Pentanol, 2-Pentanol, 3-Pentanol, Cyclopentanol, Cyclopentenol, Glycidol, Tetrahydrofurfurylalkohol, Tetrahydro-2H-pyran-4-ol, 2-Methyl-3-buten-2-ol, 3-Methyl-2-buten-2-ol, 3-Methyl-3-buten-2-ol, 1-Cyclopropyl-ethanol, 1-Penten-3-ol, 3-Penten-2-ol, 4-Penten-1-ol, 4-Penten-2-ol, 3-Pentin-1-ol, 4-Pentin-1-ol, Propargylalkohol, Allylalkohol, Hydroxy-aceton, 2-Methyl-3-butin-2-ol.

Als Beispiele für zweiwertige Alkohole seien genannt: 1,2-Ethandiol, 1,2-Propandiol, 1,3-Propandiol, Dihydroxyaceton, Thioglycerin, 2-Methyl-1,3-propandiol, 2-Butin-1,4-diol, 3-Buten-1,2-diol, 2,3-Butandiol, 1,4-Butandiol, 1,3-Butandiol, 1,2-Butandiol, 2-Buten-1,4-diol, 1,2-Cyclopentandiol, 3-Methyl-1,3-butandiol, 2,2-Dimethyl-1,3-propandiol, 4-Cyclopenten-1,3-diol, 1,2-Cyclopentandiol, 2,2-Dimethyl-1,3-propandiol, 1,2-Pentandiol, 2,4-Pentandiol, 1,5-Pentandiol, 4-Cyclopenten-1,3-diol, 2-Methylen-1,3-propandiol, 2,3-Dihydroxy-1,4-dioxan, 2,5-Dihydroxy-1,4-dithian.

Als Beispiele für dreiwertige Alkohole seien genannt: Glycerin, Erythrulose, 1,2,4-Butantriol, Erythrose, Threose, Trimethylolethan, Trimethylolpropan und 2-Hydroxymethyl-1,3-propandiol.

Als Beispiele für vierwertige Alkohole seien genannt: Erythrit, Threit, Pentaerythrit, Arabinose, Ribose, Xylose, Ribulose, Xylulose, Lyxose, Ascorbinsäure, Gluconsäure-γ-lacton.

Als Beispiele für fünfwertige Alkohole seien genannt: Arabit, Adonit, Xylit.

Die oben beschriebenen mehrwertigen Alkohole können in einer besonderen Form der Erfindung in veretheter Form eingesetzt werden. Die Ether können zum Beispiel durch Kondensationsreaktionen, Williamson'sche Ethersynthese oder durch Umsetzung mit Alkylenoxiden wie Ethylen-, Propylen- oder Butylenoxid aus den obengenannten Alkoholen hergestellt werden. Als Beispiele seien genannt: Diethylenglykol, Triethylenglykol, Polyethylenglykol, Diglycerin, Triglycerin, Tetraglycerin, Pentaglycerin, Polyglycerin, technische Gemische der Kondensationsprodukte von Glycerin, Glycerinpropoxylat, Diplycerinpropoxylat, Pentaerythritethoxylat, Dipentaeryrthrit, Ethylenglykolmonobutylether, Propylenglykolmonohexylether, Butyldiglykol, Dipropylenglykolmonomethylether.

Als einwertige Carbonsäuren für die Veresterung mit den oben genannten Alkoholen können verwendet werden: Ameisensäure, Acrylsäure, Essigsäure, Propionsäure, Buttersäure, Isobuttersäure, Valeriansäure, Isovaleriansäure, 2-Oxovalerian-säure, 3-Oxovaleriansäure, Pivalinsäure, Acetessigsäure, Laevulinsäure, 3-Methyl-2-oxo-buttersäure, Propiolsäure, Tetrahydrofuran-2-carbonsäure, Methoxyessigsäure, Dimethoxyessigsäure, 2-(2-Methoxyethoxy)-essigsäure, 2-Methylessigsäure, Brenztraubensäure, 2-Methoxyethanol, Vinylessigsäure, Allylessigsäure, 2-Pentensäure, 3-Pentensäure, Tetrahydrofuran-2-carbonsäure.

Als Beispiele für mehrwertige Carbonsäuren seien genannt: Oxalsäure, Malonsäure, Fumarsäure, Maleinsäure, Bernsteinsäure, Glutarsäure, Acetylendicarbonsäure, Oxalessigsäure, Acetondicarbonsäure, Mesoxalsäure, Citraconsäure, Dimethylmalonsäure, Methylmalonsäure, Ethylmalonsäure.

Auch Hydroxycarbonsäuren können als Ausgangsstoffe verwendet werden, z.B. Tartronsäure, Milchsäure, Äpfelsäure, Weinsäure, Citramalsäure, 2-Hydroxyvaleriansäure, 3-Hydroxyvaleriansäure, 3-Hydroxybuttersäure, 3-Hydroxyglutarsäure, Dihydroxyfumarsäure, 2,2-Dimethyl-3-hydroxy-propionsäure, Dimethylolpropionsäure, Glykolsäure.

Die Veresterung kann entweder vollständig oder partiell erfolgen. Gegebenenfalls können auch Gemische dieser Säuren für die Veresterung verwendet werden.

Die aus diesen Alkoholen und Carbonsäuren bzw. den entsprechenden Derivaten hergestellten erfindungsgemäß zu verwendenden Ester sind vorzugsweise frei von Alkalimetallen und Aminen. Dies kann erreicht werden durch Behandlung der erfindungsgemäßen Ester mit Säuren, Ionenaustauschern, essigsauren Tonerden, Aluminiumoxiden, Aktivkohle oder anderen, dem Fachmann bekannten Hilfsmitteln. Zur Trocknung und weiteren Reinigung kann Kopf destilliert werden.

Als Beispiele für die erfindungsgemäßen Ester seien genannt: Ethylacetat, Butylacetat, Glycerintriacetat, Glycerintripropionat, Triglycerinpentaacetat, Polyglycerinacetat, Diethylenglykoldiacetat, 3-Hydroxyvaleriansäureethylester, Milchsäurebutylester, Milchsäureisobutylester, 3-Hydroxybuttersäureethylester, Oxalsäurediethylester, Mesoxalsäurediethylester, Äpfelsäuredimethylester, Äpfelsäurediisopropylester, Weinsäurediethylester, Weinsäuredipropylester, Weinsäuredüsopropylester, Glutarsäuredimethylester, Bemsteinsäuredimethylester, Bemsteinsäurediethylester, Maleinsäurediethylester, Fumarsäurediethylester, Malonsäurediethylester, Acrylsäure-2-hydroxyethylester, 3-Oxovaleriansäuremethylester, Glycerindiacetat, Glycerintributyrat, Glycerintripropionat, Glycerindipropionat, Glycerintriisobutyrat, Glycerindiisobutyrat, Glycidylbutyrat, Acetessigsäurebutylester, Laevulinsäureethylester, 3-Hydroxyglutarsäuredimethylester, Glycerinacetatdipropionat, Glycerindiacetatbutyrat, Propiolsäurebutylester, Propylenglykoldiacetat, Propylenglykoldibutyrat, Diethylenglykoldibutyrat, Trimethylolethantriacetat, Trimethylolpropantriacetat, Trimethylolethantributyrat, Neopentylalkoholdibutyrat, Methoxyessigsäurepentylester, Dimethoxyessigsäurebutylester, Glykolsäurebutylester.

Der Siedepunkt der erfindungsgemäßen Ester liegt zweckmäßigerweise über 180 °C, vorzugsweise über 200 °C bei Normaldruck.

Die erfindungsgemäßen Ester werden in einer Menge bis zu 50 Gew.-%, vorzugsweise in einer Menge von 1 bis 30 Gew.-% zugesetzt, bezogen auf den Klebstoff insgesamt. Ab einer Konzentration von 30, insbesondere von 40 Gew.-% zeigen die Polycyanacrylate haftklebrige Eigenschaften.

Die Cyanacrylat-Klebstoffe basieren im wesentlichen auf üblichen Monoacrylsäureestem und/oder Biscyanoacrylaten.

Unter "üblichen Monocyanoacrylsäureestern" sind folgende Stoffe der allgemeinen Formeln zu verstehen:

H₂C = C(CN)-CO-O-R (I).

In ihr ist R eine Alkyl-, Alkenyl-, Cycloalkyl-, Aryl-, Alkoxyalkyl-, Aralkyl- oder Haloalkylgruppe, insbesondere eine Methyl-, Ethyl-, n-Propyl-, iso-Propyl-, n-Butyl-, iso-Butyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylgruppe. Die vorgenannten Cyanoacrylate sind dem Klebstoffachmann bekannt, vgl. Ullmanns's Encyclopaedia of Industrial Chemystry, Bd. A1, S. 240, Verlag Chemie Weinheim (1985) sowie US-PS 3 254 111 und PS-PS 3 654 340. Bevorzugte Monomere sind die Allyl-, Methoxyethyl-, Ethoxyethyl-, Methyl-, Ethyl-, Propyl-, Isopropyl- oder Butyl-Ester der 2-Cyanoacrylsäure.

Unter "Biscyanoacrylaten" sind Stoffe mit folgender allgemeiner Formel zu verstehen:

[H₂C = C(CN)-CO-O]₂R¹ (II)

Darin ist R¹ ein verzweigter oder unverzweigter zweiwertiger Alkan-Rest mit 2 bis 18, insbesondere 6 bis 12 C-Atomen, der auch noch Heteroatome wie Halogene und Sauerstoff oder aliphatische oder aromatische Ringe enthalten kann. Vorzugsweise ist R¹ jedoch ein reiner Kohlenwasserstoff.
Es ist wichtig, daß die Biscyanoacrylate besonders rein sind. Diese Forderung wird erfüllt, z.B. durch folgende Herstellungs- und Reinigungsmethoden: Im wesentlichen werden Monocyanoacrylate mit Diolen umgeestert und die Reaktionsgemische durch fraktionierte Kristallisation anschließend aufgearbeitet.

Ein geeignetes Verfahren zur Herstellung von Biscyanoacrylaten besteht also darin, daß man 2-Cyanoacrylsäure oder deren Alkylester der allgemeinen Formel

H₂C = C(CN)-CO-O-R² (III)

worin R² ein verzweigter oder unverzweigter Alkylrest mit 1 bis 6 C-Atomen ist, mit Diolen der allgemeinen Formel

[HO]₂R¹ (IV)

wobei R¹ ein verzweigter oder unverzweigter zweiwertiger Alkan-Rest mit 2 bis 18 C-Atomen ist, der auch noch Heteroatome wie Halogene und Sauerstoff oder aliphatische oder aromatische Ringe enthalten kann, zu Biscyanoacrylate der allgemeinen Formel II umestert und dann das Reaktionsgemisch durch fraktionierte Kristallisation reinigt.

Ein Ausgangsprodukt ist also die monofunktionelle Cyanoacrylsäure oder deren Alkylester gemäß der Formel III. Der Alkylrest ist so zu wählen, daß der entstehende Alkohol leicht entfernt werden kann. Die dazu geeigneten Möglichkeiten sind dem Fachmann aus der allgemeinen Umesterungsreaktion bekannt. Vorzugsweise wird der Alkohol destillativ entfernt. Daher ist R² ein verzweigter oder unverzweigter Alkoholrest mit 1 bis 6 C-Atomen, vorzugsweise mit einem oder zwei C-Atomen. Der monofunktionelle Cyanoacrylsäureester ist wie üblich stabilisiert.

Bei den Diolen (Formel IV) handelt es sich um zweiwertige primäre oder sekundäre Alkohole, vorzugsweise um primäre Alkohole. Die Hydroxylgruppen können zueinander in beliebiger Stellung stehen, vorzugsweise jedoch in Alpha/-Omega-Stellung. Die Diole enthalten 2 bis 18 C-Atome, vorzugsweise 6 bis 12 C-Atome. Sie können linear, verzweigt oder zyklisch angeordnet sein. Der aliphatische Rest kann auch eine aromatische Gruppe enthalten oder neben den Wasserstoff- und Kohlenstoffatomen auch noch Heteroatome, wie z.B. Chlor- oder Sauerstoff-Atome, vorzugsweise in Form von Polyethylen- oder Polypropylenglykoleinheiten. Als konkrete Diole seien genannt: Hexandiol, Octandiol, Dekandiol und Dodecandiol.

Der Cyanoacrylsäureester wird im Überschuß eingesetzt. Das molare Verhältnis von monofunktionellem Cyanoacrylsäureester zum Diol beträgt also mindestens 2,0 : 1,0, vorzugsweise jedoch 2,5 : 1,0, insbesondere 2,2 : 1,0.

Die Umesterung wird durch starke Säuren katalysiert, insbesondere durch Sulfonsäuren, vorzugsweise durch aromatische Sulfonsäuren, wie z.B. p-Toluolsulfonsäure. Aber auch Naphthalinsulfonsäure und Benzolsulfonsäure sowie saure Ionenaustauscher sind möglich. Die Konzentration des Umesterungskatalysators sollte zwischen 1 und 20 Gew.-% liegen, bezogen auf das monofunktionelle Cyanoacrylat.

Die Umesterung erfolgt - wie auch sonst üblich - in Lösung. Als Lösungsmittel dienen Aromaten und Halogenkohlenwasserstoffe. Bevorzugtes Lösungsmittel ist Toluol und Xylol. Die Konzentration der Lösung liegt im Bereich von 10 bis 50, vorzugsweise von 10 bis 20 %.

Der entstehende einwertige Alkohol bzw. das entstehende Wasser werden auf bekannte Art und Weise entfernt, vorzugsweise mit dem Lösungsmittel abdestilliert. Der Umsatz der Umesterung wird kontrolliert z.B. anhand von NMR-Spektren. Wie auch sonst dauert die Reaktion mehrere Stunden. Im Falle von Toluol als Lösungsmittel und p-Toluolsulfonsäure als Katalysator ist die Reaktion nach 10 bis 15 Stunden beendet, d.h. es scheidet sich kein Alkohol mehr ab.

Sehr wichtig ist nun die Aufarbeitung des Reaktionsgemisches. Im Falle von sauren Ionenaustauschern als Katalysator können diese einfach abfiltriert werden. Im Falle von löslichen Sulfonsäuren als Katalysator z.B. von p-Toluolsulfonsäure wird diese durch Lösungsmittelsubstitution abgetrennt: Toluol wird gegen eine Mischung aus Hexan, Heptan oder Dekan ersetzt. Nach zweimaliger fraktionierter Kristallisation erhält man reines Biscyanoacrylat. Die Reinheit beträgt nach NMR-Spektren mehr als 99 %. Das erhaltene Biscyanoacrylat ist mit den üblichen Stabilisatoren und in den üblichen Konzentrationen lagerstabil, d.h. es verändert bei 20 °C innerhalb von 6 Monaten seinen Schmelzpunkt praktisch nicht.

Die erhaltenen Biscyanoacrylate polymerisieren aber in Gegenwart von Basen sehr schnell, vorzugsweise praktisch gleich schnell wie die entsprechenden Monocyanoacrylate. Wie bei den monofunktionellen Cyanoacrylaten reichen Spuren von Wasser bereits aus. Es entsteht dann ein dreidimensional vernetztes Polymer mit relativ guten thermischen Eigenschaften.

Erfindungsgemäß wird es daher in bekannten Cyanoacrylat-Klebstoffen mitverwendet und zwar in einer Menge von 0,5 bis 50, vorzugsweise von 1 bis 10 und insbesondere von 2 bis 5 Gew.-%, bezogen auf den Klebstoff insgesamt.

Der Klebstoff kann neben dem erfindungsgemäßen Weichmacher noch weitere Additive enthalten, z.B. andere Weichmacher, Verdicker, Stabilisatoren, Aktivatoren, Farbstoffe und Beschleuniger, z.B. Polyethylenglykol oder Cyclodextrin und Polymere.

Die Polymere sollen in einer Menge von 1 bis 60, insbesondere 10 bis 50, vorzugsweise 10 bis 30 Gew.% bezogen auf die Gesamtformulierung eingesetzt werden. Geeignet sind vor allem Polymere auf Basis von Vinylestern, Vinylethern, Estern der Acrylsäure und Methacrylsäure, Styrol bzw. daraus abgeleitete Co- und Terpolymere mit Ethen, Butadien. Die Polymere können in flüssiger, harzartiger oder auch in fester Form vorliegen. Besonders wichtig ist, daß die Polymere keine Verunreinigungen aus dem Polymerisationsprozeß enthalten, die die Aushärtung des Cyanacrylats inhibieren. Wenn die Polymere einen zu hohen Wassergehalt aufweisen, muß gegebenfalls getrocknet werden. Das Molekulargewicht kann in einem breiten Rahmen gestreut sein, sollte mindestens bei Mw = 1500, höchstens jedoch bei 1.000.000 liegen, weil sonst die Endviskosität der Klebstoffformulierung zu hoch ist. Es können auch Gemische der obengenannten Polymere eingesetzt werden. Insbesondere die Kombination von niedrig- und hochmolekularen Produkten hat besondere Vorteile in Bezug auf die Endviskosität der KlebstoffFormulierung. Als Beispiele für geeignete Polymere auf Basis Vinylacetat seien genannt: die Mowilith-Typen 20, 30, und 60, die Vinnapas-Typen B1,5, B100, B17, B5, B500/20VL, B60, UW 10, UW1, UW30, UW4 und UW50. Als Beispiele für geeignete Polymere auf Basis Acrylat seien genannt: Acronal 4F und die Laromer-Typen 8912, PE55F und PO33F. Als Beispiele für geeignete Polymere auf Basis Methacrylat seien genannt: Elvacite 2042, die Neocryl-Typen B 724, B999 731, B 735, B 811, B 813, B 817 und B722, die Plexidon MW 134, die Plexigum-Typen M 825, M 527, N 742, N 80, P 24, P 28 und PQ 610. Als Beispiel für geeignete Polymere auf Basis Vinylether sei genannt: Lutonal A25.

Der Klebstoff wird wie üblich durch Mischen der.Komponenten hergestellt.
Die Lagerstabilität der neuen Klebstoffe lag in allen untersuchten Fällen über 1 Jahr bei Raumtemperatur bzw. über 10 Tage bei 80 °C.

Die Aushärtungsgeschwindigkeit wird durch die erfindungsgemäßen Weichmacher praktisch nicht beeinträchtigt, d.h. sie wird vorzugsweise nicht verdoppelt, und überschreitet 1 Min. bei EPDM praktisch nicht.

Der erfindungsgemäße neue Cyanoacrylatklebstoff eignet sich besonders für Verklebungen von insbesondere von Gummi, Metallen, Holz, Keramik, Porzellan, Pappe, Papier, Kork und Kunststoffe außer PE, PP und Teflon und Styropor.

Die Erfindung wird nun anhand von Beispielen im einzelnen erläutert:

Um einen möglichst umfassenden Überblick über die Eigenschaftsänderungen der Cyanacrylate durch die Zugabe von erfindungsgemäßen Weichmachern zu erhalten, wurden Mischungen aus grundstabilisiertem Reinester und Mischunge aus Glycerintriacetat (Triacetin) bzw. Ethylacetat in Kombination mit verschiedenen Polymeren im Bereich von 0 bis 40 Gew.-% (Additive insgesamt) hergestellt. Die Grundstabilisierung besteht aus Hydrochinon (400 bis 1000 ppm) und SO₂ (5 bis 15 ppm). Die Proben wurden sechs Tage auf der Schüttelmaschine homogenisiert und dann vermessen.

### Beispiel

In der Tabelle sind die Ergebnisse (Viskosität, Abbindezeiten, Festigkeiten) für den Estertyp AE (AE=Ethylester) in Kombination mit einer Mischung aus weichmachenden Estern und verschiedenen Polymeren dargestellt. Bei den Polymeren handelt es sich um:
- Vinnapas UW 1 = Polyvinylacetat,
- Vinnapas B 1.5 = Polyvinylacetat mit einem osmotischen Polymerisationsgrad von 100,
- Vinnapas B5 = Polyvinylacetat mit einem osmotischen Polymerisationsgrad von 150,
- Vinnapas UW 50 = Polyvinylaacetat mit einem osmotischen Polymerisationsgrad von 3 400 und
- Vinnapas B 100 = Vinylacetat/Vinyllaurat-Copolymer mit einem Polymerisationsgrad von 600.

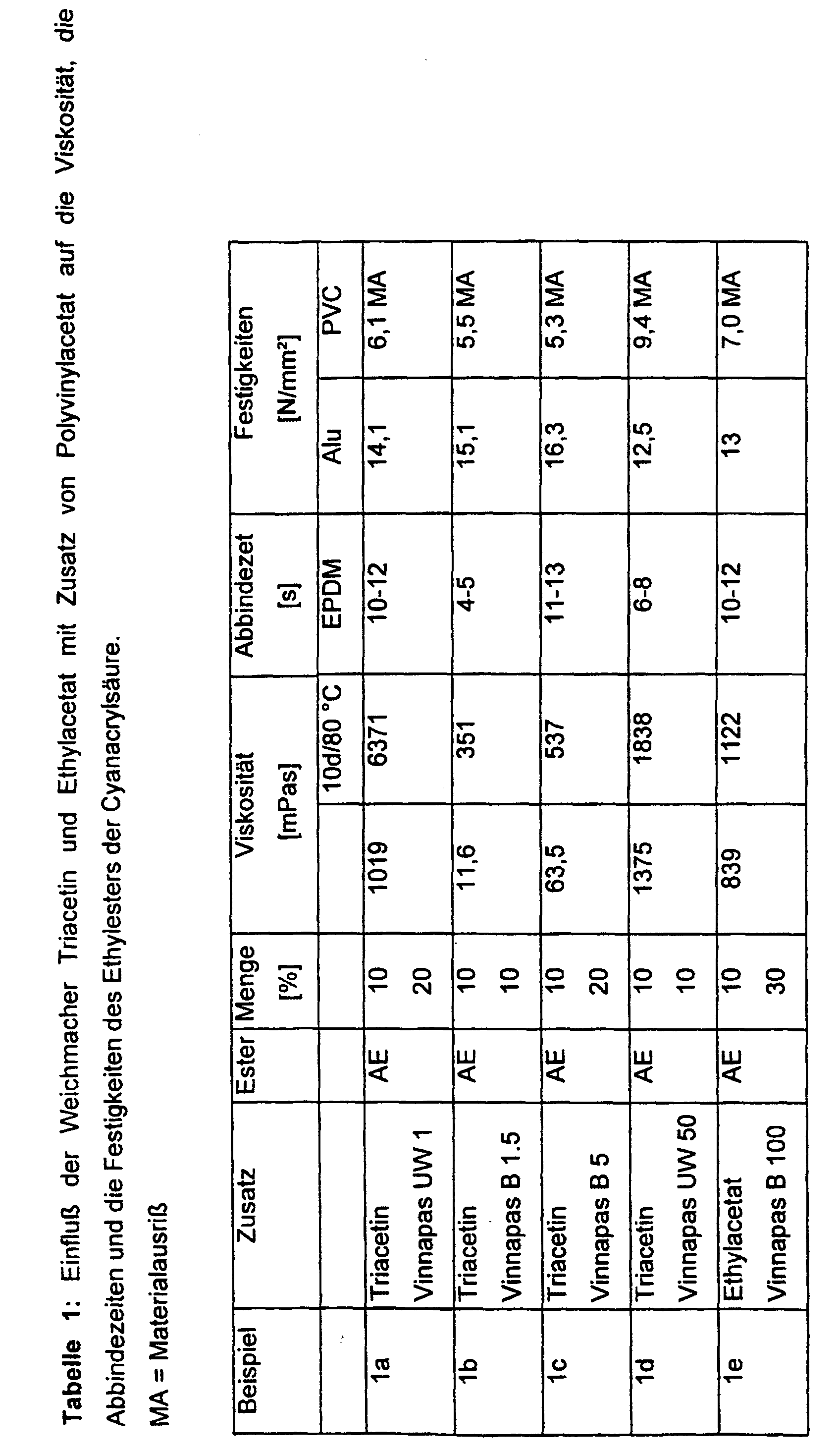

Gemäß Tabelle steigen durch die Zugabe der erfindungsgemäßen Weichmacher in Kombination mit verschiedenen Polymeren die Viskositäten stark an. Die Viskositäten nach dem Kurzzeitlagertest (10 Tage/80 °C in PE-Flaschen) steigen zwar an, weisen aber auf eine ausreichende Lagerstabilität hin. Die Festigkeiten an Aluminium und PVC liegen überraschenderweise höher als beim reinen AE.

Den Untersuchungen liegen folgende Meßmethoden zugrunde:
1. Die Viskosität wurde folgendermaßen bestimmt:
   Kegel/Platte-Meßsystem, Viskosität bei 20 ± 1 °C.
2. Die Abbindezeit aller Klebstoffzusammensetzungen wurde bei 20 °C ± 1 bei den Werkstoffen wie folgt ermittelt:
   - EPDM:: Eine Vollgummi-Rundschnur (Durchmesser 13 mm) aus Ethylen-Propylen-Terpolymer (EPDM) wurde frisch geschnitten. Auf die Oberfläche wurden 1 bis 2 Tropfen Klebstoff dosiert und die Gummischnurenden sofort zusammengefügt. Die Abbindezeit ist die Zeit bis zum Materialausriß.
   - Aluminium:: Es wurde die Zeit ermittelt, bei der zwei frisch gereinigte und geklebte Aluminiumhülsen (A = 0,5 cm²) einen meßbaren Widerstand gegen Verschieben zeigten.
   - PVC:: Es wurde die Zeit ermittelt, bis zwei gereinigte (entfettete) PVC-Streifen (Abmessung 100 x 25 x 4 mm), die 10 mm überlappend verklebt wurden, nach dem Auseinanderbrechen auf den Klebflächen nicht mehr klebten.
3. Zugscherfestigkeiten wurden folgendermaßen bestimmt:
   Die Prüfkörper waren 100 x 25 x 1,5 mm groß, die Überlappung 10 mm und die verklebte Fläche 250 mm².
   Aluminiumblech wurde gereinigt und gesandstrahlt, das PVC nur gereinigt (entfettet).
   Es wurden jeweils 5 Verklebungen durchgeführt und der Mittelwert angegeben. Die Prüfbedingungen waren:
   Die Zerreißmaschine arbeitete mit einem Vorschub von 10 mm/min.
   Die Aushärtung erfolgte in 6 Tagen bei 22 °C/40 % relativer Luftfeuchtigkeit (Klimaraum).

## Patentansprüche

1. Cyanacrylat-Klebstoff mit einem Ester-Zusatz, wobei als Ester mindestens ein Teil- und/oder Voll-Ester aus ein- oder mehrwertigen aliphatischen Carbonsäuren mit 1 bis 5 direkt miteinander verbundenen C-Atomen und 1- bis 5wertigen aliphatischen Alkoholen mit 1 bis 5 direkt miteinander verbundenen C-Atomen verwendet wird und wobei die Anzahl der direkt miteinander verbundenen C-Atome in den weiteren aliphatischen Gruppen maximal 3 beträgt, wenn eine aliphatische Gruppe 4 oder 5 C-Atome enthält, **gekennzeichnet durch** einen Gehalt von 1 bis 60 Gew.%, bezogen auf den Klebstoff insgesamt, an Polymeren auf Basis von Vinylestern, Vinylethern, Estern der Acrylsäure und Methacrylsäure, Styrol bzw. daraus abgeleiteten Co- und Terpolymeren mit Ethylen und Butadien, wobei der Ester-Zusatz frei von Katalysatoren ist.

2. Cyanacrylat-Klebstoff nach Anspruch 1, **dadurch gekennzeichnet, daß** die Alkohol-Komponente des Esters eine Wertigkeit von 1 bis 5, insbesondere von 2 bis 4, hat und daß sie 1 bis 5, insbesondere 3 oder 4, direkt miteinander verbundenden C-Atome enthält.

3. Cyanacrylat-Klebstoff nach Anspruch 1 oder 2, **dadurch gekennzeichnet, daß** die Carbonsäure-Komponente des Esters einwertig ist und 1 bis 3 direkt miteinander verbundene C-Atome enthält.

4. Cyanacrylat-Klebstoff nach mindestens einem der Ansprüche 1, 2 oder 3, **gekennzeichnet durch** Ester, die frei sind von Alkali-Metallen und Aminen.

5. Cyanacrylat-Klebstoff nach mindestens einem der Ansprüche 1 bis 4, **gekennzeichnet durch** folgende Cyanoacrylate: Ethyl-, Butyl- und Methoxyethyl-Cyanoacrylat.

6. Cyanacrylat-Klebstoff nach mindestens einem der Ansprüche 1 bis 5, **gekennzeichnet durch** bis zu 50 Gew.-%, vorzugsweise bis 30 Gew.-% an Ester, bezogen auf den Klebstoff insgesamt.

7. Cyanacrylat-Klebstoff nach Anspruch 6, **gekennzeichnet durch** 20 bis 50 Gew.-% an Ester, vorzugsweise 30 bis 45 Gew.-% an Ester, bezogen auf den Klebstoff insgesamt.

8. Cyanacrylat-Klebstoff nach Anspruch 1, 2, oder 3, **gekennzeichnet durch** Triacetin oder Diacetin als Ester.

9. Cyanacrylat-Klebstoff nach mindestens einem der Ansprüche 1 bis 8, **gekennzeichnet durch** einen Polymergehalt von 5 bis 30 Gew.%, bezogen auf den Klebstoff insgesamt.

10. Cyanacrylat-Klebstoff nach mindestens einem der Ansprüche 1 bis 9, **gekennzeichnet durch** Polyvinylacetat, Polyacrylat bzw. Polymethacrylat mit 1 bis 18 C-Atomen in der Alkoholkomponente, und zwar sowohl als Homo- als auch als Copolymer.

## Claims

1. A cyanoacrylate adhesive containing an added ester, the ester used being at least one partial and/or full ester of monobasic or polybasic aliphatic carboxylic acids containing 1 to 5 carbon atoms directly attached to one another and monohydric to pentahydric aliphatic alcohols containing 1 to 5 carbon atoms directly attached to one another, the number of carbon atoms directly attached to one another in the other aliphatic groups being at most three where one aliphatic group contains 4 or 5 carbon atoms, **characterized by** a content of 1 to 60% by weight, based on the adhesive as a whole, of polymers based on vinyl esters, vinyl ethers, esters of acrylic acid and methacrylic acid, styrene or styrene-derived co- and terpolymers with ethylene and butadiene, the added ester being catalyst-free.

2. A cyanoacrylate adhesive as claimed in claim 1, **characterized in that** the alcohol component of the ester is monohydric or pentahydric and, more particularly, dihydric to tetrahydric and contains 1 to 5, more particularly, 2 to 4 and that it contains 1 to 5, more particulary 3 or 4 carbon atoms directly attached to one another.

3. A cyanoacrylate adhesive as claimed in claim 1 or 2, **characterized in that** the carboxylic acid component of the ester is monobasic and contains 1 to 3 carbon atoms directly attached to one another.

4. A cyanoacrylate adhesive as claimed in at least one of claims 1, 2 or 3, **characterized by** esters which are free from alkali metals and amines.

5. A cyanoacrylate adhesive as claimed in at least one of claims 1 to 4, **characterized by** the following cyanoacrylates: ethyl, butyl and methoxyethyl cyanoacrylate.

6. A cyanoacrylate adhesive as claimed in at least one of claims 1 to 5, **characterized by** up to 50% by weight and preferably up to 30% by weight of ester, based on the adhesive as a whole.

7. A cyanoacrylate adhesive as claimed in claim 6, **characterized by** 20 to 50% by weight of ester and preferably 30 to 45% by weight of ester, based on the adhesive as a whole.

8. A cyanoacrylate adhesive as claimed in claim 1, 2 or 3, **characterized by** triacetin or diacetin as the ester.

9. A cyanoacrylate adhesive as claimed in at least one of claims 1 to 8, **characterized by** a polymer content of 5 to 30% by weight, based on the adhesive as a whole.

10. A cyanoacrylate adhesive as claimed in at least one of claims 1 to 9, **characterized by** polyvinyl acetate, polyacrylate or polymethacrylate containing 1 to 18 carbon atoms in the alcohol component both as homopolymer and as copolymer.

## Revendications

1. Colle au cyanoacrylate avec un additif ester, dans laquelle on utilise, en tant qu'ester, au moins un ester partiel, et/ou ester complet formé à partir de mono- ou polyacides carboxyliques aliphatiques comprenant 1 à 5 atomes de C liés directement entre eux, et d'alcools aliphatiques comprenant 1 à 5 fonctions alcool et 1 à 5 atomes de C liés directement entre eux, et le nombre des atomes de C liés directement entre eux, compris dans les autres groupes aliphatiques, est de 3 au maximum lorsqu'un groupe aliphatique comprend 4 ou 5 atomes de C, **caractérisée par** une teneur de 1 à 60 % en poids, par rapport au poids total de la colle, en polymère à base d'esters vinyliques, d'éthers vinyliques, d'esters d'acide acrylique ou méthacrylique, de styrène ou de co- et terpolymères qui en dérivent, formés avec l'éthylène et le butadiène, l'additif ester étant exempt de catalyseur.

2. Colle au cyanoacrylate selon la revendication 1, **caractérisée en ce que** le composant alcool de l'ester présente une fonctionnalité de 1 à 5, en particulier de 2 à 4, et **en ce qu'**il comprend 1 à 5, en particulier 3 ou 4, atomes de C liés directement entre eux.

3. Colle au cyanoacrylate selon la revendication 1 ou 2, **caractérisée en ce que** le composant acide carboxylique de l'ester est monofonctionnel et comprend 1 à 3 atomes de C liés directement entre eux.

4. Colle au cyanoacrylate selon au moins l'une quelconque des revendications 1, 2 ou 3, **caractérisée par** des esters qui sont exempts de métaux alcalins et d'amines.

5. Colle au cyanoacrylate selon au moins l'une des revendications 1 à 4, **caractérisée en ce qu'**il contient les cyanoacrylates suivants : cyanoacrylates d'éthyle, de butyle et de méthoxyéthyle.

6. Colle au cyanoacrylate selon au moins l'une des revendications 1 à 5, **caractérisée par** une teneur en ester pouvant aller jusqu'à 50 % en poids, de préférence jusqu'à 30 % en poids par rapport au poids total de la colle.

7. Colle au cyanoacrylate selon la revendication 6, **caractérisée par** une teneur en ester de 20 à 50 % en poids, de préférence de 30 à 45 % en poids par rapport au poids total de la colle.

8. Colle au cyanoacrylate selon la revendication 1, 2 ou 3, **caractérisée en ce qu'**il contient la triacétine ou la diacétine en tant qu'ester.

9. Colle au cyanoacrylate selon au moins l'une des revendications 1 à 8, **caractérisée par** une teneur en polymère de 5 à 30 % en poids par rapport au poids total de la colle.

10. Colle au cyanoacrylate selon au moins l'une des revendications 1 à 9, **caractérisée par** une teneur en acétate de polyvinyle, en polyacrylate ou polyméthacrylate comprenant de 1 à 18 atomes de C dans le composant alcool, autant sous forme de homo- ou de copolymère.
